# EUROPEAN PATENT APPLICATION

(11) **EP 4 206 285 A1**
(43) Date of publication of application: **05.07.2023**
(21) Application number: 21861125.9
(22) Date of filing: 30.07.2021
(51) Int. Cl.: C08L 77/06

(54) **RESIN COMPOSITION, KIT, MOLDED ARTICLE, AND MOLDED ARTICLE MANUFACTURING METHOD**

(30) Priority: 28.08.2020 JP 2020144925
(71) Applicant: Mitsubishi Engineering-Plastics Corporation, Tokyo 105-0021 (JP)
(72) Inventor: YAMAGUCHI, Takahiro, Hiratsuka-shi, Kanagawa 254-0016 (JP)
(74) Representative: Zimmermann & Partner Patentanwälte mbB
(86) International application number: PCT/JP2021/028310
(87) International publication number: WO 2022/044697

(57) **Abstract**

To provide a resin composition capable of producing a formed article that demonstrates only a small variation in laser transmittance under variable die temperature during molding of the resin composition, as well as a kit, a formed article, and, a method for manufacturing the formed article. The resin composition contains a polyamide resin, a crystal nucleating agent, and a transmissive coloring matter, content of the crystal nucleating agent, per 100 parts by mass of the polyamide resin, being more than 5 parts by mass, and 20 parts by mass or less.

## Description

### TECHNICAL FIELD

This invention relates to a resin composition, a kit, a formed article, and, a method for manufacturing a formed article. The resin composition of this invention is used mostly as a resin composition (transmissive resin composition) through which light for laser welding can transmit.

Polyamide resin, a representative engineering plastic, is easy to process, excels in mechanical property, electrical property, heat resistance, and other physicochemical properties, and has therefore been diversely applied to vehicle component, electrical/electronic equipment parts, other precision equipment parts and so forth. Also morphologically intricate parts have increasingly been manufactured by using the polyamide resin, so that parts having a hollow section, such as intake manifold, have been bonded with the aid of a variety of welding technologies including adhesive welding, vibration welding, ultrasonic welding, hot plate welding, injection welding and laser welding.

Adhesive welding has, however, suffered from loss of time before curing, and environmental impact such as peripheral pollution. Ultrasonic welding and hot plate welding have been reported to damage the product due to vibration and heat, and to require post-process for removing abrasion powder or produced burr. Injection welding has suffered from a problem that it often requires specialized dies and molding machines, and is feasible only with highly fluidic material.

On the other hand, laser welding is a method of bonding, by which a laser light-transparent (also referred to as nonabsorbing or weakly-absorbing) resin member (occasionally referred to as "transmissive resin member", hereinafter), and a laser light-absorbing resin member (occasionally referred to as "light-absorbing resin member", hereinafter) are brought into contact and welded, thereby joining both resin members. More specifically, laser light is irradiated through the transmissive resin member onto the joint face, so as to melt the light-absorbing resin member that forms the joint face with the laser energy, and to cause joining. Since laser welding produces neither abrasion powder nor burr, causes less damage on the product, and since the polyamide resin *per se* is relatively highly laser-transmissive, so that recent attention has been focused on process of the polyamide resin products with the aid of laser welding technology.

Such resin composition for laser welding has been described, for example, in Patent Literature 1 and Patent Literature 2.

### CITATION LIST

### PATENT LITERATURE

[Patent Literature 1] JP 2006-096808 A
[Patent Literature 2] JP 2004-299395 A

### SUMMARY OF THE INVENTION

### TECHNICAL PROBLEM

The resin composition for laser welding is often molded in dies typically by injection molding. Investigations by the present inventors, however, found that the obtainable formed articles demonstrated variable laser transmittance depending on die temperature. Variation of the laser transmittance depending on the die temperature would typically make strength of the laser-welded part non-uniform.

This invention is aimed at solving these problems, wherein an object of which is to provide a resin composition capable of producing a formed article that demonstrates only a small variation in laser transmittance under variable die temperature during molding of the resin composition, as well as a kit, a formed article, and, a method for manufacturing the formed article, with use of such resin composition.

### SOLUTION TO PROBLEM

The present inventors conducted research to address the above-mentioned problems, and as a result, discovered that the above problems could be solved by blending talc whose amount is larger than usual with the polyamide resin.

Specifically, the problems described above are solved by the following means.
<1> A resin composition comprising a polyamide resin, a crystal nucleating agent, and a transmissive coloring matter, content of the crystal nucleating agent, per 100 parts by mass of the polyamide resin, being more than 5 parts by mass, and 20 parts by mass or less.
<2> The resin composition of <1>, further comprising 30 to 120 parts by mass of a reinforcing fiber, per 100 parts by mass of the polyamide resin.
<3> The resin composition of <2>, wherein the reinforcing fiber contains a glass fiber.
<4> The resin composition of any one of <1> to <3>, demonstrating a difference between transmittance measured at 1070 nm wavelength in compliance with ISO 13468-2 after formed into 1.0 mm thick at a die temperature of 150°C, and transmittance measured at 1070 nm wavelength in compliance with ISO 13468-2 after formed into 1.0 mm thick at a die temperature of 110°C, of 5% or smaller.
<5> The resin composition of any one of <1> to <4>, wherein the polyamide resin contains a semi-aromatic polyamide resin.
<6> The resin composition of any one of <1> to <4>, wherein the polyamide resin contains a xylylenediamine-based polyamide resin that comprises a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from a straight-chain aliphatic α,ω-dicarboxylic acid having 4 to 20 carbon atoms.
<7> The resin composition of any one of <1> to <6>, wherein the crystal nucleating agent contains an inorganic crystal nucleating agent.
<8> The resin composition of <7>, wherein the inorganic crystal nucleating agent contains at least one selected from talc and calcium carbonate.
<9> A kit comprising the resin composition described in any one of <1> to <8>, and a light-absorbing resin composition that contains a thermoplastic resin and a light-absorbing coloring matter.
<10> A formed article formed of the resin composition described in any one of <1> to <8>, or formed of the kit described in <9>.
<11> A method for manufacturing a formed article, the method comprising laser-welding a formed article formed of the resin composition described in any one of <1> to <8>, with a formed article formed of a light-absorbing resin composition that contains a thermoplastic resin and a light-absorbing coloring matter.

### ADVANTAGEOUS EFFECTS OF INVENTION

This invention is the first to provide a resin composition capable of producing a formed article that demonstrates only a small variation in laser transmittance under variable die temperature during molding of the resin composition, as well as a kit, a formed article, and, a method for manufacturing the formed article, with use of such resin composition.

### DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

The resin composition of this embodiment contains a polyamide resin, a crystal nucleating agent, and a transmissive coloring matter. Content of the crystal nucleating agent, per 100 parts by mass of the polyamide resin, is more than 5 parts by mass, and 20 parts by mass or less. With such structure, the formed article will demonstrate only a small variation of laser transmittance under variable die temperature during molding of the resin composition.

The polyamide resin is usually a crystalline resin, which crystallizes upon solidification. Now, it was presumed that slower crystallization rate would make the obtainable formed article more variable in terms of crystallization state, under variable die temperature. It was also presumed that variable crystallization state would result in variable laser transmittance of the formed article. This embodiment devised to use the crystal nucleating agent whose amount of consumption is larger than usual. This supposedly stabilized the crystallization state after molding, supposedly made the crystallization state uniform irrespective of the die temperature, and successfully reduced variation in the laser transmittance depending on the die temperature. Stabilization of the crystallization state also supposedly made the resin fully solidified, made the crystal larger, and made the transmittance higher.

The resin composition of this embodiment will be explained below.

### <Polyamide Resin>

The resin composition of this invention contains a polyamide resin. The polyamide resin usable here may be any of known ones, preferably contains semi-aromatic polyamide resin and/or aliphatic polyamide resin, and more preferably contains semi-aromatic polyamide resin.

The semi-aromatic polyamide resin is a polyamide resin that contains a diamine-derived structural unit and a dicarboxylic acid-derived structural unit, in which aromatic ring-containing structural unit accounts for 20 to 80 mol% of the total of the diamine-derived structural unit and the dicarboxylic acid-derived structural unit. With use of such semi-aromatic polyamide resin, the obtainable formed article may have enhanced mechanical strength.

The semi-aromatic polyamide resin is exemplified by terephthalate-based polyamide resin (polyamide 6T, polyamide 9T, polyamide 10T, polyamide 6T/6I), and xylylenediamine-based polyamide resin described later. The xylylenediamine-based polyamide resin is preferred. Also isophthalate-modified products of these polyamide resins are preferred.

The aliphatic polyamide resin is a polymer in which structural units such as acid amides are chained via amide bond, obtainable by ring-opening polymerization of lactam, polycondensation of aminocarboxylic acid, or polycondensation of diamine and dibasic acid, and in which 80 mol% or more (preferably 90 mol% or more) of the raw material monomer is attributable to non-aromatic compound.

The aliphatic polyamide resin is exemplified by polyamide 6, polyamide 11, polyamide 12, polyamide 46, polyamide 66, polyamide 610, polyamide 612, polyamide 6/66, and polyamide 1010. Polyamide 66 and polyamide 6 are preferred.

As described previously, the polyamide resin used in this embodiment preferably contains a xylylenediamine-based polyamide resin. With the xylylenediamine-based polyamide resin contained therein, the resin composition tends to have enhanced Charpy impact strength.

The xylylenediamine-based polyamide resin used in this embodiment is a polyamide resin that contains a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from a straight-chain aliphatic α,ω-dicarboxylic acid having 4 to 20 carbon atoms.

In the xylylenediamine-based polyamide resin, more preferably 80 mol% or more of the diamine-derived structural unit is derived from xylylenediamine, wherein the percentage is more preferably 85 mol% or larger, even more preferably 90 mol% or larger, and yet more preferably 95 mol% or larger. Moreover in the xylylenediamine-based polyamide resin, 100 mol% or less of the diamine-derived structural unit may be derived from xylylenediamine.

The xylylenediamine preferably contains at least either metaxylylenediamine or paraxylylenediamine, and preferably contains 10 to 100 mol% of metaxylylenediamine and 90 to 0 mol% of paraxylylenediamine (note that the total of metaxylylenediamine and paraxylylenediamine does not exceed 100 mol%, the same will apply hereinafter), more preferably contains 20 to 80 mol% of metaxylylenediamine and 80 to 20 mol% of paraxylylenediamine, and even more preferably contains 60 to 80 mol% of metaxylylenediamine and 40 to 20 mol% of paraxylylenediamine. The xylylenediamine also preferably contains 40 to 100 mol% of metaxylylenediamine and 60 to 0 mol% of paraxylylenediamine.

In the xylylenediamine-based polyamide resin, more preferably 80 mol% or more of the dicarboxylic acid-derived structural unit is derived from a straight-chain aliphatic α,ω-dicarboxylic acid having 4 to 20 carbon atoms, wherein the percentage is more preferably 85 mol% or larger, even more preferably 90 mol% or larger, and yet more preferably 95 mol% or larger. Moreover in the xylylenediamine-based polyamide resin, 100 mol% or less of the dicarboxylic acid-derived structural unit may be derived from the straight-chain aliphatic α,ω-dicarboxylic acid having 4 to 20 carbon atoms.

The straight-chain aliphatic α,ω-dicarboxylic acid having 4 to 20 carbon atoms suitably used herein include adipic acid, sebacic acid, suberic acid, dodecanedioic acid, and eicosanedioic acid. Adipic acid, sebacic acid, and dodecanedioic acid are more preferred, adipic acid and sebacic acid are even more preferred, and sebacic acid is yet more preferred.

Diamine other than xylylenediamine, usable herein as a raw diamine component for the xylylenediamine-based polyamide resin, is exemplified by aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic ring-containing diamines such as bis(4-aminophenyl)ether, paraphenylenediamine, and bis(aminomethyl)naphthalene, all of which may be used singly, or in combination of two or more kinds thereof.

Dicarboxylic acid component other than the straight chain α,ω-dicarboxylic acid having 4 to 20 carbon atoms is exemplified by phthalic acid compounds such as isophthalic acid, terephthalic acid and orthophthalic acid; and isomers of naphthalenedicarboxylic acid such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, all of which may be used singly, or in combination of two or more kinds thereof.

The xylylenediamine-based polyamide resin, although having the diamine-derived structural unit and the dicarboxylic acid-derived structural unit as the major components, does not completely exclude the structural unit other than these components, and may of course contain structural units derived from lactams such as ε-caprolactam or laurolactam; or from aliphatic aminocarboxylic acid such as aminocaproic acid and aminoundecanoic acid. Now the major components mean that the total of the diamine-derived structural unit and the dicarboxylic acid-derived structural unit accounts for the largest percentage, from among the structural units that compose the xylylenediamine-based polyamide resin. In this embodiment, the total of the diamine-derived structural unit and the dicarboxylic acid-derived structural unit in the xylylenediamine-based polyamide resin preferably accounts for 90% or more of all structural units, wherein the percentage is more preferably 95% or larger.

The resin composition of this embodiment contains the polyamide resin (preferably, xylylenediamine-based polyamide resin) whose content preferably accounts 30 to 80% by mass of the resin composition. The polyamide resin (preferably, xylylenediamine-based polyamide resin) preferably accounts for 35% by mass or more of the resin composition, wherein the percentage is more preferably 40% by mass or larger, and even more preferably 45% by mass or larger. Meanwhile, the percentage is more preferably 75% by mass or smaller, and even more preferably 70% by mass or smaller.

Only one kind of, or two or more kinds of polyamide resin may be contained. When two or more kinds are contained, the total content preferably falls within any of the aforementioned ranges.

### <Other Resin>

The resin composition of this embodiment may contain a resin component other than the aforementioned polyamide resin, but not always necessarily.

Such other resin is exemplified by elastomer, vinyl-based resin, styrene-based resin, acrylic resin, and further by polyester resin, polycarbonate resin, and polyacetal resin.

The resin composition of this embodiment is preferably designed to contain substantially no resin component other than the polyamide resin (preferably other than the xylylenediamine-based polyamide resin). The phrase "... to contain substantially no ..." means that the content of such other resin component accounts for 4% by mass or less of the resin composition, which is more preferably 1% by mass or less, more preferably 0.5% by mass or less, even more preferably 0.1% by mass or less, and even may be 0% by mass.

### <Crystal Nucleating Agent>

The resin composition of this embodiment contains more than 5 parts by mass, and 20 parts by mass or less of a crystal nucleating agent, per 100 parts by mass of the polyamide resin. With the content of the crystal nucleating agent thus increased than before, the obtainable formed article will be able to demonstrate uniform light transmittance, irrespective of the die temperature during molding.

The crystal nucleating agent is not specifically limited as long as it remains unmelted during melt process, and can serve as a nucleus of crystal in cooling process. Either organic crystal nucleating agent or inorganic crystal nucleating agent is acceptable, wherein inorganic crystal nucleating agent is preferred.

The inorganic crystal nucleating agent is exemplified by graphite, molybdenum bisulfide, barium sulfate, talc, calcium carbonate, sodium phosphate, mica and kaolin. At least either talc or calcium carbonate is more preferred, and talc is even more preferred.

The organic crystal nucleating agent usable herein may be any of known ones without special limitation, and is preferably at least one selected for example from dibenzylidene sorbitolbased nucleating agent, nonitol-based nucleating agent, phosphate ester-based nucleating agent, rosin-based nucleating agent, and metal benzoate-based nucleating agent.

The crystal nucleating agent preferably has the number-average particle size whose lower limit value is 0.1 µm or above. The upper limit value of the number-average particle size of the crystal nucleating agent is preferably 40 µm or below, more preferably 30 um or below, even more preferably 28 µm or below, yet more preferably 15 µm or below, and furthermore preferably 10 µm or below. With the number-average particle size adjusted to 40 µm or smaller, the particle count of the crystal nucleating agent that serves as the nucleus increases relative to the amount of blending of the crystal nucleating agent, and the crystal structure will tend to be further stabilized.

Content of the crystal nucleating agent in the resin composition of this embodiment, per 100 parts by mass of the polyamide resin, is more than 5 parts by mass, more preferably 6 parts by mass or more, even more preferably 7 parts by mass or more, yet more preferably 8 parts by mass or more, and furthermore preferably 9 parts by mass or more. At or above the lower limit value, crystallization state of the resin composition may be stabilized more thoroughly, thereby further stabilizing the transmittance. Meanwhile, the content of the crystal nucleating agent in the resin composition of this embodiment, per 100 parts by mass of the polyamide resin, is 20 parts by mass or less, preferably 18 parts by mass or less, and more preferably 16 parts by mass or less. At or below the upper limit value, a formed specimen formed with use of the resin composition will have further stabilized transmittance, without largely degrading the strength.

The content of the crystal nucleating agent in the resin composition of this embodiment is preferably 4% by mass or more in the resin composition, meanwhile the content of the crystal nucleating agent in the resin composition of this embodiment is preferably 13% by mass or less in the resin composition, and more preferably 11% by mass or less.

The resin composition of this embodiment may contain only one kind of, or two or more kinds of the crystal nucleating agent. When two or more kinds are contained, the total content preferably falls within any of the aforementioned ranges.

### <Transmissive Coloring Matter>

The resin composition of this embodiment contains a transmissive coloring matter. With the transmissive coloring matter contained therein, a transmissive resin member and a light-absorbing resin member formed of the resin composition of this embodiment will have similar color tone, thus improving design quality of the formed article.

The transmissive coloring matter used in this embodiment is preferably any of coloring matters that look black to human eyes (black series coloring matters), such as black coloring matter, dark purple coloring matter, and mixed black coloring matter which is a mixture of two or more kinds of chromatic coloring matter. The transmissive coloring matter is defined by a coloring matter that makes a blend demonstrate a light transmittance of 20% or larger, when measured at 1070 nm wavelength according to the measurement method described later in EXAMPLES, typically when 0.2% by mass of such coloring matter (a coloring matter presumed to be a transmissive coloring matter) is blended with the polyamide resin (typically MP10 used in EXAMPLES described later) and 30% by mass of glass fiber, totaling 100% by mass.

The transmissive coloring matter may be either dye or pigment.

The transmissive coloring matter used in this embodiment is specifically exemplified by nigrosine, naphthalocyanine, aniline black, phtharocyanine, porphyrin, perinone, perylene, quaterrylene, azo dye, anthraquinone, pyrazolone, squaric acid derivative, and immonium dye.

Commercially available products are exemplified by colorants e-BIND LTW-8731H and e-BIND LTW-8701H, from Orient Chemical Industries Co., Ltd.; colorants Plast Yellow 8000, Plast Red M 8315 and Oil Green 5602, from Arimoto Chemical Co., Ltd.; colorants Macrolex Yellow 3G, Macrolex Red EG and Macrolex Green 3, from LANXESS GmbH; and Spectrasence K0087 (former Lumogen Black K0087, Lumogen FK4280), Spectrasence K0088 (former Lumogen Black K0088, Lumogen FK4281), from BASF Colors & Effects Japan Ltd.

The resin composition of this embodiment preferably contains 0.01 parts by mass or more of the transmissive coloring matter, per 100 parts by mass of the polyamide resin, wherein the content is more preferably 0.04 parts by mass or more, even more preferably 0.08 parts by mass or more, yet more preferably 0.10 parts by mass or more, furthermore preferably 0.15 parts by mass or more, again furthermore preferably 0.18 parts by mass or more, and particularly preferably 0.20 parts by mass or more. Meanwhile, the resin composition of this embodiment preferably contains 1.5 parts by mass or less of the transmissive coloring matter, per 100 parts by mass of the polyamide resin, wherein the content is more preferably 1.0 parts by mass or less, even more preferably 0.8 parts by mass or less, yet more preferably 0.6 parts by mass or less, furthermore preferably 0.5 parts by mass or less, and again furthermore preferably 0.45 parts by mass or less.

The resin composition of this embodiment may contain only one kind of, or two or more kinds of the transmissive coloring matter. When two or more kinds are contained, the total content preferably falls within any of the aforementioned ranges.

### <Reinforcing Fiber>

It is preferred that the resin composition of this embodiment further contains 30 to 120 parts by mass of a reinforcing fiber. With the reinforcing fiber contained therein, the obtainable formed article may have enhanced mechanical strength.

The reinforcing fiber used in the resin composition of this embodiment is a substance that demonstrates, when blended with the resin, an effect of improving mechanical properties of a resultant resin composition, to which any of commonly used reinforcing materials for plastics is applicable. The reinforcing fiber may be either organic substance or inorganic substance, wherein the inorganic substance is preferred. The reinforcing fiber preferably used herein includes fibrous reinforcing fiber such as glass fiber, carbon fiber, basalt fiber, wollastonite, and potassium titanate fiber. Among them, glass fiber is preferred from the viewpoint of mechanical strength, rigidity and heat resistance. The glass fiber used herein may have either circular cross section or modified cross section.

The reinforcing fiber used herein is more preferably surface-treated with a surface treatment agent such as coupling agent. Glass fiber having the surface treatment agent adhered thereon is preferred for its excellent durability, moist heat resistance, hydrolysis resistance, and heat shock resistance.

The glass fiber has a glass composition of A-glass, C-glass, E-glass, S-glass, R-glass, M-glass, D-glass or the like, wherein E-glass (non-alkali glass) is particularly preferred.

The glass fiber is defined as an article that looks fibrous, and has an exact circular or polygonal cross section perpendicular to the longitudinal direction.

The glass fiber used for the resin composition of this embodiment may be a single yarn, or may be a twisted yarn made of a plurality of single yarns.

Product form of the glass fiber may be any of "glass roving" which is a roll on which a single yarn or twisted yarn made of a plurality of single yarns is continuously wound, "chopped strand" cut into 1 to 10 mm length, and "milled fiber" ground into 10 to 500 um length. These sorts of glass fiber are marketed under the trade names "Glasron Chopped Strand" and "Glasron Milled Fiber" from Asahi Fiber Glass Co., Ltd., which are readily available. Glass fibers with different morphologies may also be used in a combined manner.

The glass fiber used in this embodiment has a cross section which may be circular or non-circular. With use of the glass fiber having a non-circular cross section, the obtainable formed article will be effectively suppressed from warping. In this embodiment, even use of the glass fiber having a circular cross section can effectively suppress the warpage.

Content of the reinforcing fiber in the resin composition of this embodiment, per 100 parts by mass of the polyamide resin, is preferably 30 parts by mass or more, more preferably 35 parts by mass or more, and even more preferably 40 parts by mass or more. The upper limit value, per 100 parts by mass of the polyamide resin, is 120 parts by mass or below, more preferably 110 parts by mass or below, even more preferably 100 parts by mass or below, and may be 90 parts by mass or below.

The content of the reinforcing fiber in the resin composition of this embodiment is preferably 20% by mass or more of the resin composition, which is more preferably 25% by mass or more. The upper limit value is preferably 70% by mass or below, more preferably 65% by mass or below, even more preferably 60% by mass or below, and yet more preferably 55% by mass or below.

The resin composition of this embodiment may contain only one kind of, or two or more kinds of the reinforcing fiber. When two or more kinds are contained, the total content preferably falls within any of the aforementioned ranges. The content of the reinforcing fiber in this embodiment conceptionally includes the amounts of sizing agent and surface treatment agent.

### <Stabilizer>

The resin composition of this embodiment may contain a stabilizer (antioxidant, heat stabilizer).

The stabilizer is exemplified by copper compound (CuI, etc.), alkali metal halide (KI, etc.), hindered phenol-based heat stabilizer, metal salt of fatty acid (zinc stearate, etc.), and cerium oxide. Copper compound and/or alkali metal halide are preferably contained.

Detail of the stabilizer may be understood referring to the description in paragraphs [0018] to [0020] of JP 2016-074804 A, the content of which is incorporation herein by reference.

Content of the stabilizer, when contained in the resin composition of this embodiment, is preferably 0.01 to 5 parts by mass, per 100 parts by mass of the polyamide resin, which is more preferably 0.08 to 3 parts by mass, and even more preferably 0.1 to 1 parts by mass.

The resin composition of this embodiment may contain only one kind of, or two or more kinds of the stabilizer. When two or more kinds are contained, the total content preferably falls within any of the aforementioned ranges.

### <Mold Releasing Agent>

The resin composition of this embodiment may also contain a mold releasing agent.

The mold releasing agent is exemplified by aliphatic carboxylic acid, salt of aliphatic carboxylic acid, ester of aliphatic carboxylic acid and alcohol, aliphatic hydrocarbon compound having a number-average molecular weight of 200 to 15,000, polysiloxane-based silicone oil, ketone wax, and light amide. Among them, preferred are aliphatic carboxylic acid, salt of aliphatic carboxylic acid, and ester of aliphatic carboxylic acid and alcohol; and more preferred is salt of aliphatic carboxylic acid.

Detail of the mold releasing agent may be understood referring to the description in paragraphs [0055] to [0061] of JP 2018-095706 A, the content of which is incorporated herein by reference.

Content of the mold releasing agent, when contained in the resin composition of this embodiment, is preferably 0.05 to 3% by mass in the resin composition, more preferably 0.1 to 0.8% by mass, and even more preferably 0.2 to 0.6% by mass.

The resin composition of this embodiment may contain only one kind of, or two or more kinds of the mold releasing agent. When two or more kinds are contained, the total content preferably falls within any of the aforementioned ranges.

### <Other Components>

The resin composition of this invention may contain other component without departing from the spirit of this invention. Such other component is exemplified by UV absorber, fluorescent brightener, anti-dripping agent, antistatic agent, anti-clouding agent, anti-blocking agent, flow modifier, plasticizer, dispersion aid, antibacterial agent, and flame retardant. These components may be used singly, or in combination of two or more kinds thereof.

Note that, in the resin composition of this embodiment, contents of the polyamide resin, the crystal nucleating agent, the transmissive coloring matter, as well as the reinforcing fiber and such other additives are controlled so that the individual components are added up to 100% by mass. This embodiment is exemplified by a mode in which the total content of the polyamide resin, the crystal nucleating agent, the transmissive coloring matter, the reinforcing fiber, the stabilizer, and the mold releasing agent accounts for 99% by mass or more of the resin composition.

### <Physical Properties of Resin Composition>

The resin composition of this embodiment preferably demonstrates a small variation of transmittance under variable temperature of forming dies. More specifically, the resin composition of this embodiment preferably demonstrates a difference between transmittance measured at 1070 nm wavelength in compliance with ISO 13468-2 after formed into 1.0 mm thick at a die temperature of 150°C, and transmittance measured at 1070 nm wavelength in compliance with ISO 13468-2 after formed into 1.0 mm thick at a die temperature of 110°C, of 5% or smaller, which is more preferably 4% or smaller, even more preferably 3% or smaller, and may even be 2.8% or smaller. The lower limit value of the difference of transmittance is preferably 0% or above.

The resin composition of this embodiment preferably demonstrates high transmittance after given as a formed article. More specifically, the resin composition of this embodiment preferably demonstrates a transmittance, measured at 1070 nm wavelength in compliance with ISO 13468-2 after formed into 1.0 mm thick at a die temperature of 110°C, of 50% or larger, which is more preferably 60% or larger. A upper limit value of 90% or smaller will practically suffice to satisfy required performances, although ideally 100%.

The transmittance is measured according to the description later in EXAMPLES.

### <Method for Preparing Resin Composition>

The method for preparing the resin composition of this embodiment is preferably, but not restrictively, a method of using a single-screw or twin-screw extruder, equipped with a unit capable of devolatalizing through a vent port. The polyamide resin component, the crystal nucleating agent, the transmissive coloring matter, as well as the reinforcing fiber, and other optional additive may be fed collectively to the extruder; or the polyamide resin component may be fed first, followed by sequential feeding of the other components. The reinforcing fiber is preferably side-fed in the middle of the extruder, in order to avoid crushing during kneading. Alternatively, two or more kinds of the components chosen from among the individual components may be preliminarily mixed and kneaded.

In this embodiment, the transmissive coloring matter may be preliminarily mixed with a polyamide resin or the like to prepare a masterbatch, and the masterbatch may be further kneaded with the other components to obtain the resin composition of this embodiment.

The method for manufacturing a formed article with use of the resin composition of this invention is not specifically limited, to which any of known forming methods applied to thermoplastic resin are applicable, from among injection molding, hollow molding, extrusion molding, press forming and so forth. Particularly preferred forming method in this case is injection molding, considering the good fluidity. Resin temperature in injection molding is preferably controlled at 250 to 300°C.

A heat insulating die may also be used for manufacturing the formed article. With use of the heat insulating die, the effect of this invention will be more effectively demonstrated. The heat insulating dye may be understood referring to those described in JP 2013-244643 A, JP 2013-244644 A, JP 2014-046590 A, and JP 2014-046591 A, the contents of which are incorporated herein by reference.

### <Kit>

The resin composition of this embodiment, and a light-absorbing resin composition that includes a thermoplastic resin and a light-absorbing coloring matter, are preferably used for a kit for producing a formed article by laser welding.

That is, the resin composition of this embodiment contained in the kit plays a role of the transmissive resin composition, and the formed article formed of such transmissive resin composition serves as the transmissive resin member through which laser light can transmit during laser welding. On the other hand, a formed article formed of the light-absorbing resin composition serves as a light-absorbing resin member that absorbs laser light during laser welding.

### <<Light-absorbing Resin Composition>>

The light-absorbing resin composition used in this embodiment contains a thermoplastic resin and a light-absorbing coloring matter. Other component such as reinforcing filler may also be contained.

The thermoplastic resin is exemplified by polyamide resin, olefinic resin, vinyl-based resin, styrene-based resin, acrylic resin, polyphenylene ether resin, polyester resin, polycarbonate resin, and polyacetal resin. In particular, polyamide resin, polyester resin, and polycarbonate resin are preferred from the viewpoint of good compatibility with the transmissive resin composition (the resin composition of this embodiment), and polyamide resin is more preferred. Only one kind of, of two or more kinds of the thermoplastic resin may be used.

The polyamide resin used for the light-absorbing resin composition is preferably the aforementioned xylylenediamine-based polyamide resin, but without special limitation on types and so forth.

The reinforcing filler is exemplified by laser-absorbing fillers such as glass fiber, carbon fiber, silica, alumina, carbon black, and inorganic powder coated with a laser-absorptive material. Glass fiber is preferred. The glass fiber is synonymous to the glass fiber which may be blended to the aforementioned resin composition of this embodiment. Content of the reinforcing filler is preferably 20 to 70% by mass, more preferably 25 to 60% by mass, and even more preferably 30 to 55% by mass.

The light-absorbing coloring matter encompasses a coloring matter whose absorption wavelength falls in the wavelength range of the laser to be irradiated, which is typically within the range from 900 nm to 1100 nm wavelength in this embodiment. The light-absorbing coloring matter also encompasses a coloring matter that makes a blend demonstrate a light transmittance of smaller than 20%, or further 10% or smaller, when measured according to the measurement method described later in EXAMPLES, typically when 0.3% by mass of such coloring matter is blended with 100 parts by mass of the xylylenediamine-based polyamide resin.

The light-absorbing coloring matter is specifically exemplified by inorganic pigments [black pigments such as carbon black (acetylene black, lamp black, thermal black, furnace black, channel black, Ketjen black, etc.), red pigment such as red iron oxide, orange pigment such as molybdate orange, white pigment such as titanium oxide]; and organic pigments (yellow pigment, orange pigment, red pigment, blue pigment, green pigment, etc.). Among them, the inorganic pigments are preferred for their high concealability as a whole, and black pigment is further preferred. These light-absorbing coloring matters may be used in combination of two or more kinds thereof.

Content of the light-absorbing coloring matter in the light-absorbing resin composition is preferably 0.01 to 30 parts by mass, per 100 parts by mass of the thermoplastic resin (preferably polyamide resin, and more preferably xylylenediamine-based polyamide resin).

In the kit, the component of the transmissive resin composition of this embodiment excluding the transmissive coloring matter and the reinforcing fiber, and, the component of the light-absorbing resin composition excluding the light-absorbing coloring matter and the reinforcing filler, are preferably commonalized up to a degree of 80% by mass or more, which is more preferably 90% by mass or more, and even more preferably 95 to 100% by mass. With such structure, the obtainable formed article will have further improved laser weldability.

### <<Laser Welding Method>>

Next, the laser welding method will be explained. In this embodiment, the formed article (transmissive resin member) formed of the resin composition of this embodiment, and, the formed article (light-absorbing resin member) formed of the aforementioned light-absorbing resin composition may be laser-welded to manufacture a formed article (laser-welded article). The laser welding can tightly weld the transmissive resin member and the light-absorbing resin member, without using an adhesive.

Shape of the members, although not specifically limited, usually has at least a surface-contact part (flat or curved), since the members are used in a joined form as a result of laser welding. In the laser welding, the laser light transmitted through the transmissive resin member is absorbed by the light-absorbing resin member, causing melting and welding of both members. The formed article formed of the resin composition of this embodiment has high transmittance of laser light, and is therefore suitably used as the transmissive resin member. Thickness of the member through which laser light transmits (thickness of a part through which laser light transmits, when measured in the direction of transmission of laser light) is suitably determined, considering application, chemical composition of the resin composition and so forth, which is typically 5 mm or smaller, and preferably 4 mm or smaller.

Laser light source used for laser welding may be determined depending on absorption wavelength of the light-absorbing coloring matter, for which laser in a wavelength range of 900 to 1100 nm is preferred, and to which semiconductor laser or fiber laser is applicable.

More specifically, in an exemplary case where the transmissive resin member and the light-absorbing resin member are welded, first, the welding sites of both members are brought into contact. The welding sites herein are preferably kept in surface contact, which may be given between flat faces, curved faces, or combination of flat and curved faces. Next, the laser light is irradiated through the transmissive resin member. The laser light herein may be optionally condensed through a lens, on the interface between both members. The condensed beam transmits through the transmissive resin member, absorbed at or around the surface of the light-absorbing resin member, generates heat, and melts the resin. The heat is then conducted by thermal conduction also to the transmissive resin member to melt it, to form a molten pool at the interface between both members. After cooled, both members are welded.

The formed article, composed of the transmissive resin member and the light-absorbing resin member thus welded, has high weld strength. Note that the formed article in the context of this embodiment encompasses not only finished product or parts, but also members that compose a part of them.

The formed article obtained by laser welding in this embodiment excels in mechanical strength and weld strength, and has only less damage on the resin even after laser irradiation, and is therefore applicable to various purposes, such as a variety of storage containers, electrical/electronic equipment parts, office automation (OA) equipment parts, home electric appliance parts, machine and mechanism parts, and vehicle mechanism parts. In particular, the formed article is suitable for food container, drug container, oil and fat products container, vehicle hollow part (various tanks, intake manifold part, camera body, etc.), vehicle electrical part (various control units, ignition coil part, etc.), motor part, various sensor parts, connector part, switch part, circuit breaker part, relay part, coil part, transformer part, lamp part, and so forth. In particular, a car-borne camera part formed of the resin composition of this embodiment or with use of the kit is suitable for car-borne camera.

### EXAMPLES

This invention will further be detailed referring to Examples. All materials, amounts of consumption, proportions, process details and procedures described in Examples below may suitably be modified, without departing from the spirit of this invention. Hence, the scope of this invention is by no means limited to specific Examples below.

In a case where any measuring instrument used in EXAMPLES has become unavailable typically due to discontinuation, the measurement may be conducted with use of other instrument having equivalent performances.

### 1. Raw Materials

### <Polyamide Resins>

MP10: polyamide resin synthesized by Exemplary Synthesis described below
MP12: polyamide resin synthesized by Exemplary Synthesis described below
MP6: polyamide resin synthesized by Exemplary Synthesis described below
PA66: polyamide 66, Invista U4800, from Invista Nylon Polymer Co.
PA6: polyamide 6, 1013B from Ube Corporation
MXD6: #6000, from Mitsubishi Gas Chemical Company, Inc.

### <<Exemplary Synthesis of MP10>>

Into a reaction vessel equipped with a stirrer, a partial condenser, a total condenser, a thermometer, a dripping funnel, a nitrogen feeding tube, and a strand die, placed were 9991 g (49.4 mol) of sebacic acid and 11.66 g of sodium acetate/sodium hypophosphite monohydrate (mole ratio = 1/1.5), the inside was thoroughly replaced with nitrogen gas, and the content was heated up to 170°C for melting, while stirring the system under a flow of small amount of nitrogen gas.

To the molten matter kept stirred in the reaction vessel, added dropwise was 6647 g of mixed xylylenediamine, which is a 70/30 (mole ratio) mixture of metaxylylenediamine and paraxylylenediamine (34.16 mol of metaxylylenediamine, 14.64 mol of paraxylylenediamine, from Mitsubishi Gas Chemical Company, Inc.), and the inner temperature was continuously elevated over 2.5 hours up to 235°C, while discharging water released as a result of condensation. Upon completion of the dropwise addition, the inner temperature was elevated, the inside of the reaction vessel was decompressed after reaching 240°C, the inner temperature was further elevated, and kept at 250°C for 10 minutes to continue the melt polycondensation. The system was then pressurized with nitrogen gas, the resultant polymer was taken out through the strand die, and pelletized, to obtain a polyamide resin.

### <<Synthesis of MP12>>

Into a reaction vessel equipped with a stirrer, a partial condenser, a total condenser, a thermometer, a dripping funnel, a nitrogen feeding tube, and a strand die, placed were 11377 g (49.4 mol) of 1,12-dodecanedioic acid and 11.66 g of sodium acetate/sodium hypophosphite monohydrate (mole ratio = 1/1.5), the inside was thoroughly replaced with nitrogen gas, and the content was heated up to 170°C for melting, while stirring the system under a flow of small amount of nitrogen gas.

To the molten matter kept stirred in the reaction vessel, added dropwise was 6647 g of mixed xylylenediamine, which is a 70/30 (mole ratio) mixture of metaxylylenediamine and paraxylylenediamine (34.16 mol of metaxylylenediamine, 14.64 mol of paraxylylenediamine, from Mitsubishi Gas Chemical Company, Inc.), and the inner temperature was continuously elevated over 2.5 hours up to 235°C, while discharging water released as a result of condensation. Upon completion of the dropwise addition, the inner temperature was elevated, the inside of the reaction vessel was decompressed after reaching 240°C, the inner temperature was further elevated, and kept at 250°C for 10 minutes to continue the melt polycondensation. The system was then pressurized with nitrogen gas, the resultant polymer was taken out through the strand die, and pelletized, to obtain a polyamide resin.

### <<Synthesis of MP6>>

Into a reaction vessel equipped with a stirrer, a partial condenser, a total condenser, a thermometer, a dripping funnel, a nitrogen feeding tube, and a strand die, placed were 7220 g (49.4 mol) of adipic acid (from Rhodia S.A.) and 11.66 g of sodium acetate/sodium hypophosphite monohydrate (mole ratio = 1/1.5), the inside was thoroughly replaced with nitrogen gas, and the content was heated up to 170°C for melting, while stirring the system under a flow of small amount of nitrogen gas.

To the molten matter kept stirred in the reaction vessel, added dropwise was 6647 g of mixed xylylenediamine, which is a 70/30 (mole ratio) mixture of metaxylylenediamine and paraxylylenediamine (34.16 mol of metaxylylenediamine, 14.64 mol of paraxylylenediamine, from Mitsubishi Gas Chemical Company, Inc.), and the inner temperature was continuously elevated over 2.5 hours up to 260°C, while discharging water released as a result of condensation. Upon completion of the dropwise addition, the inner temperature was elevated, the inside of the reaction vessel was decompressed after reaching 270°C, the inner temperature was further elevated, and kept at 280°C for 20 minutes to continue the melt polycondensation. The system was then pressurized with nitrogen gas, the resultant polymer was taken out through the strand die, and pelletized, to obtain a polyamide resin.

### <Crystal Nucleating Agent>

Talc: Micron White #5000S, from Hayashi Kasei Co., Ltd.
Calcium carbonate: NS#100, from Nitto Funka Kogyo K.K.

### <Transmissive Coloring Matter>

Dye: e-BIND LTW-8701H, a masterbatch of transmissive coloring matter with polyamide 66, from Orient Chemical Industries Co., Ltd.
Lumogen Black K0087 (former Lumogen Black FK4280): perylene pigment, from BASF Colors & Effects Japan Ltd.
Lumogen Black K0088 (former Lumogen Black FK4281): perylene pigment, from BASF Colors & Effects Japan Ltd.

### <Reinforcing Fiber>

GF: ECS03T-756H, glass fiber, from Nippon Electric Glass Co., Ltd.

### <Copper Iodide (CuI)>

Copper(I) iodide, from Nihon Kagaku Sangyo Co., Ltd.

### <Potassium Iodide>

Product from FUJIFILM Wako Pure Chemical Corporation

### <Zinc(II) Stearate>

Product from FUJIFILM Wako Pure Chemical Corporation

### <Mold Releasing Agent>

Mold releasing agent: Light Amide WH255, from Kyoeisha Chemical Co., Ltd.

### 2. Examples 1 to 14, Comparative Examples 1 to 6

### <Compound>

The individual components listed in Tables 1 to 4 described below, but excluding the glass fiber, were weighed according to the ratios (in parts by mass) listed in Tables, dry-blended, and fed from the base of screws of a twin-screw extruder (TEM26SS, from Toshiba Machine Co., Ltd.) with use of a twin-screw cassette weighing feeder (CE-W-1-MP, from Kubota Corporation). The glass fiber was fed with use of a vibrating cassette weighing feeder (CE-V-1B-MP, from Kubota Corporation), from the lateral side of the aforementioned twin-screw extruder, then melt-kneaded with the resin component and so forth, to obtain a resin composition pellet. Temperature of the extruder was preset to 280°C.

### <Transmittance>

The thus obtained resin composition pellet was dried at 120°C for 4 hours, and then molded into a test specimen for measurement of transmittance (a 50 mm×90 mm molded piece, having 50 mm×30 mm sections of 1 mm thick, 2 mm thick, and 3 mm thick, molded by side gating at the 3 mm thick section). The cylinder temperature was preset to 280°C. Die temperature was varied at two levels, 110°C and 150°C, under which the individual test specimens were molded.

Transmittance (in %) was measured through the 1 mm thick section of the test specimen, with use of a UV-visible spectrophotometer at 1070 nm wavelength.

The injection molding machine used herein was J-50ADS from The Japan Steel Works, Ltd., and the UV-visible spectrophotometer used herein was HSP-150VIR from Murakami Color Research Laboratory Co., Ltd.

**[Table 1]**

| Raw material | Comparative Example 1 | Comparative Example 2 | Comparative Example 3 | Example 1 | Example 2 | Example 3 |
|---|---|---|---|---|---|---|
| MP10 | 67.1 | 66.4 | 65.4 | 62.4 | 59.9 | 57.4 |
| PA66 | | | | | | |
| PA6 | | | | | | |
| MXD6 | | | | | | |
| MP12 | | | | | | |
| MP6 | | | | | | |
| Talc | 0.3 | 1 | 2 | 5 | 7.5 | 10 |
| Calcium carbonate | | | | | | |
| Copper(I) iodide | 0.075 | 0.075 | 0.075 | 0.075 | 0.075 | 0.075 |
| Potassium iodide | 0.2 | 0.2 | 0.2 | 0.2 | 0.2 | 0.2 |
| Zinc(II) stearate | 0.025 | 0.025 | 0.025 | 0.025 | 0.025 | 0.025 |
| Mold releasing agent | 0.3 | 0.3 | 0.3 | 0.3 | 0.3 | 0.3 |
| Dye LTW-8701H | 2 | 2 | 2 | 2 | 2 | 2 |
| Dye Lumogen K0087 | | | | | | |
| Dye Lumogen K0088 | | | | | | |
| GF | 30 | 30 | 30 | 30 | 30 | 30 |
| (1) 110°C, 1070 nm | 74 | 72 | 70 | 71 | 70 | 69 |
| (2) 150°C, 1070 nm | 55 | 59 | 60 | 68 | 69 | 69 |
| Δ(1) - (2) | 18 | 13 | 9 | 3 | 1 | 0 |

**[Table 2]**

| Raw material | Comparative Example 4 | Example 4 | Example 5 | Example 6 | Comparative Example 5 | Example 7 |
|---|---|---|---|---|---|---|
| MP10 | 47.1 | 42.4 | 61.7 | 61.7 | 67.1 | 62.4 |
| PA66 | | | | | | |
| PA6 | | | | | | |
| MXD6 | | | | | | |
| MP12 | | | | | | |
| MP6 | | | | | | |
| Talc | 0.3 | 5 | 7.5 | 7.5 | | |
| Calcium carbonate | | | | | 0.3 | 5 |
| Copper(I) iodide | 0.075 | 0.075 | 0.075 | 0.075 | 0.075 | 0.075 |
| Potassium iodide | 0.2 | 0.2 | 0.2 | 0.2 | 0.2 | 0.2 |
| Zinc(II) stearate | 0.025 | 0.025 | 0.025 | 0.025 | 0.025 | 0.025 |
| Mold releasing agent | 0.3 | 0.3 | 0.3 | 0.3 | 0.3 | 0.3 |
| Dye LTW-8701H | 2 | 2 | | | 2 | 2 |
| Dye Lumogen K0087 | | | 0.2 | | | |
| Dye Lumogen K0088 | | | | 0.2 | | |
| GF | 50 | 50 | 30 | 30 | 30 | 30 |
| (1) 110°C, 1070 nm | 73 | 72 | 37 | 58 | 77 | 59 |
| (2) 150°C, 1070 nm | 56 | 70 | 39 | 55 | 57 | 47 |
| Δ(1) - (2) | 18 | 2 | 0 | 3 | 21 | 12 |

**[Table 3]**

| Raw material | Example 8 | Example 9 | Example 10 | Example 11 |
|---|---|---|---|---|
| MP10 | | | | |
| PA66 | 62.4 | 59.9 | | |
| PA6 | | | 62.4 | 59.9 |
| MXD6 | | | | |
| MP12 | | | | |
| MP6 | | | | |
| Talc | 5 | 7.5 | 5 | 7.5 |
| Calcium carbonate | | | | |
| Copper(I) iodide | 0.075 | 0.075 | 0.075 | 0.075 |
| Potassium iodide | 0.2 | 0.2 | 0.2 | 0.2 |
| Zinc(II) stearate | 0.025 | 0.025 | 0.025 | 0.025 |
| Mold releasing agent | 0.3 | 0.3 | 0.3 | 0.3 |
| Dye LTW-8701H | 2 | 2 | 2 | 2 |
| Dye Lumogen K0087 | | | | |
| Dye Lumogen K0088 | | | | |
| GF | 30 | 30 | 30 | 30 |
| (1) 110°C, 1070 nm | 66 | 59 | 73 | 72 |
| (2) 150°C, 1070 nm | 65 | 57 | 72 | 70 |
| Δ(1)-(2) | 1 | 2 | 1 | 1 |

**[Table 4]**

| Raw material | Comparative Example 6 | Example 12 | Example 13 | Example 14 |
|---|---|---|---|---|
| MP10 | | | | |
| PA66 | | | | 24 |
| PA6 | | | | |
| MXD6 | | | | 35.9 |
| MP12 | | | 59.9 | |
| MP6 | 67.1 | 57.4 | | |
| Talc | 0.3 | 10 | 7.5 | 7.5 |
| Calcium carbonate | | | | |
| Copper(I) iodide | 0.075 | 0.075 | 0.075 | 0.075 |
| Potassium iodide | 0.2 | 0.2 | 0.2 | 0.2 |
| Zinc(II) stearate | 0.025 | 0.025 | 0.025 | 0.025 |
| Mold releasing agent | 0.3 | 0.3 | 0.3 | 0.3 |
| Dye LTW-8701H | 2 | 2 | 2 | 2 |
| Dye Lumogen K0087 | | | | |
| Dye Lumogen K0088 | | | | |
| GF | 30 | 30 | 30 | 30 |
| (1) 110°C, 1070 nm | 76 | 60 | 72 | 71 |
| (2) 150°C, 1070 nm | 47 | 55 | 70 | 66 |
| Δ(1) - (2) | 30 | 5 | 2 | 5 |

In Tables 1 to 4, "110°C, 1070 nm" denotes transmittance of the test specimen molded in a die with a cavity surface temperature of 110°C, and measured at 1070 nm wavelength.

"Δ(1)-(2)" denotes a difference (absolute value) between the aforementioned transmittance values (1) and (2), in %.

As is clear from the results, the cases with much contents of the crystal nucleating agent (Examples 1 to 14) demonstrated almost no difference of transmittance between the formed articles molded at a die temperature of 110°C, and the test pieces molded at a die cavity surface temperature of 150°C.

In contrast, the cases with less contents of the crystal nucleating agent demonstrated large difference of transmittance between the formed articles molded at die temperatures of 110°C and 150°C (Comparative Examples 1 to 6).

A pellet for forming a light-absorbing resin member was obtained in the same way as for the resin composition in Example 1, except that the transmissive coloring matter was not blended, and instead 3 parts by mass of carbon black #45 from Mitsubishi Chemical Corporation was blended. With use of the pellet obtained in Example 1 and the pellet for forming the light-absorbing resin member, laser welding was conducted according to the description in paragraphs [0072], [0073] and Fig. 1 of JP 2018-168346 A. Proper laser welding was confirmed.

## Claims

1. A resin composition comprising a polyamide resin, a crystal nucleating agent, and a transmissive coloring matter,
a content of the crystal nucleating agent, per 100 parts by mass of the polyamide resin, being more than 5 parts by mass, and 20 parts by mass or less.

2. The resin composition of claim 1, further comprising 30 to 120 parts by mass of a reinforcing fiber, per 100 parts by mass of the polyamide resin.

3. The resin composition of claim 2, wherein the reinforcing fiber contains a glass fiber.

4. The resin composition of any one of claims 1 to 3, demonstrating a difference between transmittance measured at 1070 nm wavelength in compliance with ISO 13468-2 after formed into 1.0 mm thick at a die temperature of 150°C, and transmittance measured at 1070 nm wavelength in compliance with ISO 13468-2 after formed into 1.0 mm thick at a die temperature of 110°C, of 5% or smaller.

5. The resin composition of any one of claims 1 to 4, wherein the polyamide resin contains a semi-aromatic polyamide resin.

6. The resin composition of any one of claims 1 to 4, wherein the polyamide resin contains a xylylenediamine-based polyamide resin that comprises a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from a straight-chain aliphatic α,ω-dicarboxylic acid having 4 to 20 carbon atoms.

7. The resin composition of any one of claims 1 to 6, wherein the crystal nucleating agent contains an inorganic crystal nucleating agent.

8. The resin composition of claim 7, wherein the inorganic crystal nucleating agent contains at least one selected from talc and calcium carbonate.

9. A kit comprising the resin composition described in any one of claims 1 to 8, and a light-absorbing resin composition that contains a thermoplastic resin and a light-absorbing coloring matter.

10. A formed article formed of the resin composition described in any one of claims 1 to 8, or formed of the kit described in claim 9.

11. A method for manufacturing a formed article, the method comprising laser-welding a formed article formed of the resin composition described in any one of claims 1 to 8, with a formed article formed of a light-absorbing resin composition that contains a thermoplastic resin and a light-absorbing coloring matter.
